# EUROPÄISCHE PATENTSCHRIFT

(11) **EP 3 302 998 B1**
(45) Veröffentlichungstag und Bekanntmachung des Hinweises auf die Patenterteilung: **10.07.2019**
(21) Anmeldenummer: 16724289.0
(22) Anmeldetag: 19.05.2016
(51) Int. Cl.: B42D 25/47

(54) **APPLIZIERVORRICHTUNG**
APPLICATION DEVICE
DISPOSITIF D'APPLICATION

(30) Priorität: 27.05.2015 DE 102015006854
(43) Veröffentlichungstag der Anmeldung: 11.04.2018
(60) Teilanmeldung: 19000045.5
(73) Patentinhaber: Giesecke+Devrient Currency Technology GmbH, 81677 München (DE)
(72) Erfinder: SCHINABECK, Josef, 82467 Garmisch-Partenkirchen (DE); GREGAREK, André, 81671 München (DE); HOFFMÜLLER, Winfried, 83646 Bad Tölz (DE); GEBAUER, Christoph, 80804 München (DE); MENGEL, Christoph, 83607 Holzkirchen (DE); KELLER, Mario, 83358 Seebruck (DE); PFEIFFER, Matthias, 81675 München (DE)
(86) Internationale Anmeldenummer: PCT/EP2016/000837
(87) Internationale Veröffentlichungsnummer: WO 2016/188624

(56) Entgegenhaltungen:
- EP-A1- 1 457 320
- EP-A1- 2 860 042

## Beschreibung

Die Erfindung betrifft eine Vorrichtung zum Applizieren von Sicherheitselementen, ein Sicherheitselemente-Trägerband, ein Verfahren zum Applizieren von Sicherheitselementen.

Wertdokumente im Sinne der Erfindung sind unter anderem Banknoten, Aktien, Anleihen, Urkunden, Gutscheine, Schecks, Flugscheine, hochwertige Eintrittskarten, Etiketten zur Produktsicherung, Kredit- oder Geldkarten, aber auch andere fälschungsgefährdete Dokumente, wie Pässe, Ausweiskarten oder sonstige Ausweisdokumente.

Wertdokumente, insbesondere Banknoten, werden üblicherweise aus Papiersubstraten, Polymersubstraten oder Kombinationen aus Papier und Polymer gefertigt, die besondere Sicherheitsmerkmale, wie z.B. einen zumindest teilweise in das Papier eingearbeiteten Sicherheitsfaden oder ein Wasserzeichen aufweisen. Als weiteres Sicherheitsmerkmal können sogenannte Fensterfolien, Sicherheitsfäden, -bänder auf das Wertdokument aufgeklebt/laminiert oder eingebracht werden. Sicherheitselemente umfassen üblicherweise als Träger- bzw. Basismaterial ein Polymer oder Polymerzusammensetzungen. Typischerweise weisen Sicherheitselemente optisch variable Sicherheitsmerkmale, wie Hologramme oder bestimmte Farbkippeffekte, auf, um so eine bessere Fälschungssicherheit zu gewährleisten. Der besondere Vorteil von optisch variablen Sicherheitselementen ist, dass die Sicherheitsmerkmale auf diesen Sicherheitselementen nicht durch bloßes Kopieren mit Kopiergeräten nachgeahmt werden können, da Effekte eines optisch variablen Sicherheitsmerkmals durch das Kopieren verloren gehen oder sogar nur schwarz erscheinen.

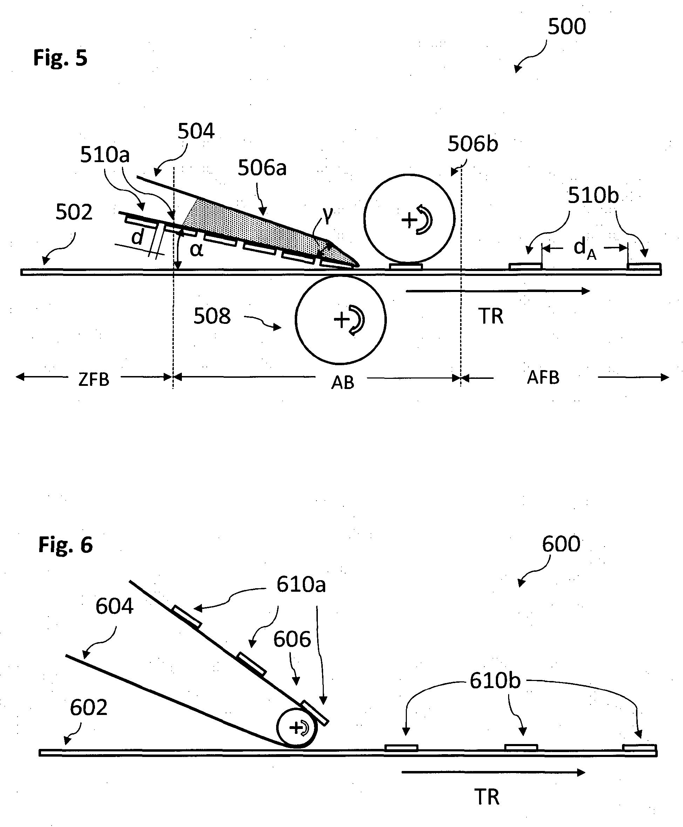

Es gibt bereits Vorrichtungen zum Applizieren von Elementen. Zur Veranschaulichung dieser Vorrichtungen wird auf Fig. 6 verwiesen, welche die bisherige Situation gemäß dem Stand der Technik veranschaulichen soll.

In EP 2 860 042 A1, das eine Vorrichtung nach dem Oberbegriff des Anspruchs 1 offenbart, werden zwei ausgestanzte Substratteile zu einer Substratschicht zusammengeführt und durch eine Kaschierfolie stabilisiert, die Sicherheitselemente aufweisen kann.

Es ist eine Aufgabe der vorliegenden Erfindung, eine Vorrichtung bereitzustellen, welche es ermöglicht, Sicherheitselemente mit geringerem Zeit- und Kostenaufwand auf Wertdokumentsubstraten zu applizieren.

Diese Aufgaben werden durch die Gegenstände der unabhängigen Ansprüche gelöst. Bevorzugte Ausführungsformen sind in den abhängigen Ansprüchen definiert.

Ein erster Aspekt der Erfindung betrifft eine Vorrichtung nach Anspruch 1.

Vorteilhafterweise kann durch die vorliegende Vorrichtung mit dem Applizierbereich, in welchem die Sicherheitselemente mit deren zweiter Hauptfläche auf der Wertdokumentsubstratbahn appliziert werden, erreicht werden, dass die Sicherheitselemente trotz engerer Anordnung auf dem Sicherheitselemente-Trägerband sicher und bei hohen Prozessgeschwindigkeiten auf die Wertdokumentsubstratbahn übertragen werden können. Weiterhin vorteilhafterweise kann durch die vorliegende Vorrichtung der erforderliche Materialverbrauch für das Sicherheitselemente-Trägerband gesenkt werden.

Die Wertdokumentsubstrat-Transporteinrichtung ist vorzugsweise als Rolle-zu-Rolle-Einrichtung ausgestaltet. In einem Ausgangszustand ist die Wertdokumentsubstratbahn auf eine Rolle bzw. Zylinder aufgewickelt. Alternativ liegt die Wertdokumentsubstratbahn als Endlossubstrat vor. Mittels eines oder mehrerer Förderrollen der Wertdokumentsubstrat-Transporteinrichtung wird die Wertdokumentsubstratbahn durch den Applizierbereich transportiert. Eine Wertdokumentsubstratbahn, die im Ausgangszustand auf eine Rolle aufgewickelt ist, wird hierbei abgewickelt/ abgerollt. Vorzugsweise wird die Wertdokumentsubstratbahn nach dem Passieren des Applizierbereichs wieder auf eine Rolle bzw. einen Zylinder aufgewickelt. Weiterhin vorzugsweise kann die Wertdokumentsubstratbahn nach dem Applizierbereich einem oder mehreren weiteren Bearbeitungsbereich(en) zugeführt werden, bevor die Wertdokumentsubstratbahn auf eine Rolle bzw. einen Zylinder aufgewickelt wird oder in Bögen konfektioniert wird.

Vorzugsweise können vor dem Applizierbereich ein oder mehrere Bearbeitungsbereiche angeordnet sein.

Die Sicherheitselemente-Transporteinrichtung ist vorzugsweise als Rolle-zu-Rolle-Einrichtung ausgestaltet. In einem Ausgangszustand ist das Sicherheitselemente-Trägerband auf eine Rolle bzw. Zylinder aufgewickelt. Alternativ liegt das Sicherheitselemente-Trägerband als Endlosband vor. Mittels eines oder mehrerer Förderrollen der Sicherheitselemente-Transporteinrichtung wird das Sicherheitselemente-Trägerband durch den Applizierbereich transportiert. Ein Sicherheitselemente-Trägerband, das im Ausgangszustand auf eine Rolle aufgewickelt ist, wird hierbei abgewickelt/ abgerollt.

Vorzugsweise wird das Sicherheitselemente-Trägerband ohne Sicherheitselemente nach dem Passieren des Applizierbereichs wieder auf eine Rolle bzw. einen Zylinder aufgewickelt.

Die adhäsiven Eigenschaften der Sicherheitselemente an deren zweiter Hauptfläche kann beispielsweise durch eine auf den Sicherheitselementen aufgebrachte Adhäsionsschicht bzw. Klebstoffschicht erreicht werden. Insbesondere kann als Klebstoff ein Heißsiegelklebstoff verwendet werden.

Vorzugsweise sind die Haftkräfte bzw. Adhäsionskräfte, die zwischen der ersten Hauptfläche des Sicherheitselemente-Trägerbandes und der ersten Hauptfläche der Sicherheitselemente wirken, geringer als die Haftkräfte bzw. Adhäsionskräfte, die zwischen der zweiten Hauptfläche der Sicherheitselemente und der Wertdokumentsubstratbahn wirken.

Die Sicherheitselemente werden im Applizierbereich von dem Sicherheitselemente-Trägerband auf das Wertdokumentsubstrat übertragen. Das Sicherheitselement wird im Applizierbereich - insbesondere gleichzeitig - von dem Sicherheitselemente-Trägerband gelöst und auf das Wertdokumentsubstrat aufgebracht.

Die Sicherheitselemente sind vorzugsweise mehrschichtig ausgebildet. Vorzugsweise umfasst ein Sicherheitselement ein Trägermaterial, wie ein Folienelement und/oder ein oder mehrere Lackschichten und/oder ein oder mehrere Klebstoffschichten und/ oder ein oder mehrere Metallschichten und/oder eine oder mehrere Halbmetallschichten und/oder dielektrische Schichten.

Das Sicherheitselement kann ein Folienelement umfassen, welches zu selbsttragenden Eigenschaften des Sicherheitselements führt. Dieses Sicherheitselement wird auch als selbsttragendes Sicherheitselement, insbesondere L-LEAD oder L-Patch, bezeichnet.

Das Sicherheitselement kann ohne Folienelement, welches zu selbsttragenden Eigenschaften des Sicherheitselements führt, ausgebildet sein. Dieses Sicherheitselement wird auch als nicht-selbsttragendes Sicherheitselement, insbesondere als T-LEAD oder T-Patch, bezeichnet.

Bevorzugt weisen die Wertdokumentsubstratbahn und das Sicherheitselemente-Trägerband im Applizierbereich im Wesentlichen die gleiche Transportrichtung auf.

Insbesondere vorzugsweise weisen die Wertdokumentsubstratbahn und die Sicherheitselemente-Trägerband in dem Bereich, in welchem die Übertragung/ das Applizieren der Sicherheitselemente auf die Wertdokumentsubstratbahn stattfindet, die gleiche Transportrichtung auf.

Bevorzugt transportiert die Vorrichtung das Sicherheitselemente-Trägerband und die Wertdokumentsubstratbahn in einem Rolle-zu-Rolle-Verfahren durch den Applizierbereich.

Vorzugsweise weist die Wertdokumentsubstratbahn im Applizierbereich eine Geschwindigkeit zwischen 40 m/min und 150 m/min auf. Vorzugsweise ist die Geschwindigkeit des Sicherheitselemente-Trägerbandes im Applizierbereich geringer als die der Wertdokumentsubstratbahn.

Vorzugsweise weist die Vorrichtung in dem Applizierbereich eine Appliziereinrichtung auf. Vorzugsweise umfasst die Appliziereinrichtung eine oder mehrere Applizierrollen bzw. eine oder mehrere Übertragungsrollen. Vorzugsweise umfasst die Appliziereinrichtung einen oder mehrere Applizierkeile. Der Applizierkeil (oder die Applizierrolle) sind insbesondere eingerichtet, um die Sicherheitselemente vom Sicherheitselemente-Trägerband zu lösen und auf das Wertdokumentsubstrat aufzubringen. Weiterhin vorzugsweise weist die Appliziereinrichtung eine oder mehrere Kalanderrollen bzw. -walzen auf. Vorzugsweise ist ein Applizierkeil neben einer Kalanderrolle angeordnet. Vorzugsweise ist der Applizierkeil beheizt. Vorzugsweise ist die Kalanderrolle beheizt.

Vorzugsweise dient der beheizte Applizierkeil dazu, Klebstoff der Sicherheitselemente zu aktivieren und so ein Anhaften auf der Wertdokumentsubstratbahn zu fördern. Im Anschluss daran können die Sicherheitselemente mithilfe der beheizten Kalanderrolle endgültig auf der Wertdokumentsubstratbahn fixiert werden. Die Kalanderrolle/-walze kann eine Breite aufweisen, die der Breite der Wertdokumentsubstratbahn entspricht. Alternativ kann die Kalanderrolle/-walze eine Breite aufweisen, die der Breite eines Sicherheitselements entspricht.

Vorzugsweise weist die Appliziereinrichtung eine Breite, d.h. in die Richtung quer zur Transportrichtung des Sicherheitselemente-Trägerbandes, im Bereich von 20 mm bis 1500 mm auf.

Vorteilhafterweise weist die Vorrichtung im Applizierbereich eine Gegendruckeinrichtung auf, die einen zur Appliziereinrichtung, insbesondere zur Applizierrolle und/oder zur Kalanderrolle, entgegengesetzten Druck bereitstellt. Die Gegendruckeinrichtung ist vorzugsweise eine Gegendruckrolle / Gegendruckzylinder.

Vorteilhafterweise wird hierdurch zusätzliche Krafteinwirkung auf die Wertdokumentsubstratbahn und/oder das Sicherheitselemente-Trägerband verringert bzw. vermieden.

Weiterhin vorzugsweise ist der Applizierbereich zwischen einem Zuführbereich und einem Abführbereich des Sicherheitselemente-Trägerbandes angeordnet.

Weiterhin vorzugsweise umfängt das Sicherheitselemente-Trägerband den Umfang der Appliziereinrichtung zu 40% oder mehr bzw. zu mindestens 40%. Vorzugsweise ist die Appliziereinrichtung beheizbar. Vorzugsweise ist die Appliziereinrichtung ausgelegt, das Sicherheitselemente-Trägerband zu erwärmen. Vorzugsweise umfängt das Sicherheitselemente-Trägerband den Umfang der Appliziereinrichtung derart, dass ein Wärmeübertrag von einer beheizten Appliziereinrichtung auf ein Sicherheitselemente-Trägerband möglich ist. Weiterhin vorzugsweise kann eine Heizeinrichtung zum Erwärmen des Sicherheitselemente-Trägerbandes im Applizierbereich vorgesehen sein, um die adhäsiven Eigenschaften der Sicherheitselemente an deren zweiter Hauptfläche zu aktivieren und dadurch ein Anhaften der Sicherheitselemente an der Wertdokumentsubstratbahn beim Applizieren zu fördern.

Weiterhin vorzugsweise weist die Vorrichtung einen Applizierwinkel γ auf. Der Applizierwinkel γ liegt vorzugsweise in einem Bereich von 5° bis 40° und/ oder von 5° bis 30° und/ oder von 5° bis 25° und/ oder von 5° bis 20° und/ oder von 5° bis 15° und/ oder von 5° bis 10° und/ oder von 8° bis 20° und/ oder von 8° bis 15°.

Weiterhin vorzugsweise schließen das Sicherheitselemente-Trägerband und die Wertdokumentsubstratbahn im Abführbereich einen Winkel β ein.

Vorzugsweise umfasst die Vorrichtung mindestens einen Bearbeitungsbereich, der vor dem Applizierbereich angeordnet ist. Vorzugsweise ist ein Bearbeitungsbereich ein Schneidebereich und/oder ein Stanzbereich. Vorzugsweise kann in einem Schneidebereich und/oder einem Stanzbereich die Wertdokumentsubstratbahn bearbeitet werden. Zum Beispiel können sog. Fenster bzw. Löcher verschiedenster Form in die Wertdokumentsubstratbahn eingebracht werden. Vorzugsweise werden diese Fenster bzw. Löcher später durch das Applizieren von Sicherheitselementen verschlossen.

Vorzugsweise treffen die nachstehenden Ausführungen bezüglich des Sicherheitselemente-Trägerbandes, des Verfahrens zum Applizieren sowie zum Wertdokument in analoger Weise auch auf die vorher beschriebene Vorrichtung zu.

Das Sicherheitselemente-Trägerband weist eine Vielzahl von Sicherheitselementen auf, wobei das Sicherheitselemente-Trägerband eine erste und eine zweite Hauptfläche aufweist, die einander gegenüberstehen,
jedes Sicherheitselement eine erste und eine zweite Hauptfläche aufweist, die einander gegenüberstehen,
jedes Sicherheitselement mit seiner ersten Hauptfläche an der ersten Hauptfläche des Sicherheitselemente-Trägerbandes angeordnet ist, und die zweite Hauptfläche jedes Sicherheitselements zum Applizieren auf die Wertdokumentsubstratbahn adhäsive Eigenschaften aufweist. Vorzugsweise werden die Sicherheitselemente aufgrund der adhäsiven Eigenschaften auf der Wertdokumentsubstratbahn fixiert.

Vorzugsweise umfasst das Sicherheitselemente-Trägerband als Trägerbandmaterial eine Trägerfolie. Besonders bevorzugt beinhaltet die Trägerfolie Polyethylenterephthalat (PET) und/oder Polypropylen (PP), besonders bevorzugt ist das Trägermaterial aus PET oder PP.

Vorzugsweise weisen die Sicherheitselemente in Richtung der Transportrichtung des Sicherheitselemente-Trägerbandes einen Abstand von 5 mm bis 80 mm auf.
Vorzugsweise weisen die Sicherheitselemente in Richtung quer zur Transportrichtung des Sicherheitselemente-Trägerbandes einen Abstand von 5 mm bis 200 mm auf.

Bevorzugt weist das Sicherheitselemente-Trägerband auf seiner ersten Hauptfläche adhäsive Eigenschaften auf.

Vorteilhafterweise haften hierdurch die Sicherheitselemente auf dem Sicherheitselemente-Trägerband während des Transports in der vorher beschriebenen Vorrichtung bis zum Applizierbereich an der ersten Hauptfläche des Sicherheitselemente-Trägerbandes. Jedoch sind die adhäsiven Eigenschaften derart eingestellt, dass die Sicherheitselemente in dem Applizierbereich von der ersten Hauptfläche des Sicherheitselemente-Trägerband lösbar sind, um auf der Wertdokumentsubstratbahn appliziert zu werden.

Vorzugsweise weist das Sicherheitselemente-Trägerband auf seiner ersten Hauptfläche diskrete Bereiche auf, die die adhäsiven Eigenschaften aufweisen, und wobei diese diskreten Bereiche von Sicherheitselementen überdeckt werden.

Vorteilhafterweise liegen die adhäsiven Eigenschaften somit nur in den Bereichen vor, die durch die Sicherheitselemente abgedeckt sind.

Vorzugsweise sind diese diskreten Bereiche kleiner als die erste Hauptfläche eines jeden Sicherheitselements, so dass jeweils die erste Hauptfläche der Sicherheitselemente über die diskreten Bereiche partiell mit dem Sicherheitselemente-Trägerband verbunden ist.

Vorzugsweise weist die erste Hauptfläche eines jeden Sicherheitselements keine selbstklebenden Eigenschaften auf.

Vorteilhafterweise sind die adhäsiven Eigenschaften zwischen den Sicherheitselementen und dem Sicherheitselemente-Trägerband derart eingestellt, dass die Sicherheitselemente von dem Sicherheitselemente-Trägerband (leicht) lösbar sind.

Vorzugsweise weist die zweite Hauptfläche des Sicherheitselemente-Trägerbandes antihaftende Eigenschaften auf.
Vorzugsweise weist die zweite Hauptfläche des Sicherheitselemente-Trägerbandes für antihaftende Eigenschaften eine Antihaftschicht auf, wie eine Wachsschicht.

Alternativ oder zusätzlich ist ein Trennband an der zweiten Hauptfläche des Sicherheitselemente-Trägerbandes angeordnet.

Vorzugsweise ist das Trennband vorgesehen, wenn das Sicherheitselemente-Trägerband auf eine Rolle/ Zylinder aufgerollt ist, um ein Verbinden der zweiten Hauptfläche der Sicherheitselemente mit der zweiten Hauptfläche des Sicherheitselemente-Trägerbandes zu verhindern.

Vorzugsweise sind die Sicherheitselemente Patches und/oder (LEAD-)Streifen. Vorzugsweise können die Patches als L-Patches und/oder T-Patches ausgebildet sein. Vorzugsweise können die (LEAD-)Streifen als L- LEAD und/ oder T- LEAD ausgebildet sein. Ein Sicherheitsstreifen (oder -faden) ist vorgesehen, um sich über die vollständige Breite (bzw. Länge) eines Substrates, beispielsweise des Wertdokumentes, zu erstrecken. Ein Patch als Sicherheitselement ist in Länge und Breite kleiner, in der Regel wesentlich keiner, als das Substrat (beispielsweise des Wertdokumentes), für welches der Patch vorgesehen ist.

Vorzugsweise weisen die Sicherheitselemente eine Länge in Richtung der Transportrichtung des Sicherheitselemente-Trägerbandes von 5 mm bis 70 mm auf. Vorzugsweise weisen die Sicherheitselemente eine Breite in Richtung quer zur Transportrichtung des Sicherheitselemente-Trägerbandes von 5 mm bis 40 mm, vorzugsweise 5 mm bis 20 mm auf.

Vorzugsweise weisen die Sicherheitselemente Sicherheitsmerkmale auf, die als Reliefstrukturen, wie Hologramme, Mikrolinsen, Mikrospiegel, Mottenaugenstrukturen, Mikrokavitäten, ausgebildet sind. Alternativ oder zusätzlich weisen die Sicherheitselemente Sicherheitsmerkmale auf, die als zwei- oder mehrschichtige Dünnschichtaufbauten/-elemente ausgebildet sind, wie sie für Farbkippeffekte verwendet werden. Alternativ oder zusätzlich weisen die Sicherheitselemente Sicherheitsmerkmale auf, die als Druckmuster ausgebildet sind, wobei UV-fluoreszierende und/oder magnetisch ausrichtbare Effektpigmente enthalten sein können. Alternativ oder zusätzlich weisen die Sicherheitselemente Sicherheitsmerkmale auf, die als Negativzeichen und/oder Negativmuster ausgebildet sind. Vorzugsweise sind die Sicherheitsmerkmale derart gestaltet, dass sie in Aufsicht und/oder Durchsicht sichtbar sind.

Vorzugsweise treffen die Ausführungen bezüglich der Vorrichtung und die nachstehenden Ausführungen zum Verfahren zum Applizieren sowie zum Wertdokument in analoger Weise auch auf das vorher beschriebene Sicherheitselemente-Trägerband zu.

Ein weiterer Aspekt betrifft ein Verfahren nach Anspruch 7.

Vorzugsweise treffen die Ausführungen bezüglich der Vorrichtung und die nachstehenden Ausführungen zum Verfahren zum Applizieren in analoger Weise auch auf das vorher beschriebene Sicherheitselemente-Trägerband zu. In dem Schritt des Applizierens wird das Sicherheitselement vorzugsweise gleichzeitig vom Sicherheitselemente-Trägerband gelöst und auf das Wertdokumentsubstrat aufgebracht.

Ein Sicherheitselement kann insbesondere eine Folie oder ein mehrschichtiges Substrat beinhalten, wobei das mehrschichtige Substrat auch eine Kombination aus Gewebesubstraten und Folien aufweisen kann. Beispielsweise kann das Sicherheitselement einen Fensterbereich umfassen, der dazu dient ein Loch in einem Wertdokument bzw. im Papiersubstrat des Wertdokuments zu füllen bzw. zu überbrücken. In anderen Worten kann mit dem Sicherheitselement ein Sicherheitsfenster in einem Wertdokument ein- / aufgebracht werden. Vorzugsweise ist der zu beschichtende Bereich in dem Fensterbereich des Sicherheitselements angeordnet. Alternativ kann das Sicherheitselement auf ein Wertdokument aufgebracht, zum Beispiel laminiert oder geklebt, werden. Das Sicherheitselement kann ein Sicherheitsfaden oder -band, Fensterfaden, Patch oder ähnliches sein.

Ein Wertdokument, insbesondere eine Banknote, mit einem Wertdokumentsubstrat und zumindest einem Sicherheitselement, kann mittels einer oder mehrerer der vorher beschriebenen Verfahrensschritte und/oder unter den beschriebenen Aspekten hergestellt werden.

Ein Sicherheitselement wird vorzugsweise auf eine Wertdokumentsubstratbahn aufgebracht, wobei eine Wertdokumentsubstratbahn in Wertdokumentsubstratbögen und danach in Wertdokumentsubstratnutzen konfektioniert wird. Als Grundlage für eine Wertdokumentsubstratbahn dient Wertdokumentsubstrat. Wertdokumentsubstrat kann aus natürlichem Polymer wie Baumwolle, synthetischem Polymer wie Polypropylen oder einer Kombination aus natürlichem und synthetischem Polymer hergestellt sein, welche auch Papier-Polymer-Kombination genannt wird.

Die Oberseite und Unterseite des Wertdokuments sowie die des Sicherheitselements können auch als Hauptflächen bezeichnet werden. Diese Hauptflächen geben relevante Informationen an einen Betrachter wieder. Folglich sind die Hauptflächen für einen Betrachter, der ein Wertdokument mit einem Sicherheitselement betrachtet, sichtbar. Zum Beispiel kann eine Hauptfläche einer Banknote den Wert der Banknote sowie deren Seriennummer wiedergeben. Entsprechend kann eine Ober- und Unterseite eines Sicherheitselements ebenso wie die eines Wertdokuments auch als erste und zweite Hauptfläche angesehen werden.

Vorzugsweise treffen die Ausführungen bezüglich des Wertdokuments in analoger Weise auch auf die vorher beschriebene Vorrichtung, auf das vorher beschriebene Sicherheitselemente-Trägerband sowie auf das vorher beschriebene Verfahren zum Applizieren zu.

Die Erfindung wird nachstehend anhand von bevorzugten Ausführungsformen in Verbindung mit den beigefügten Figuren erläutert, bei deren Darstellung auf eine maßstabs- und proportionsgetreue Wiedergabe verzichtet wurde, um die Anschaulichkeit zu erhöhen.

Es zeigen:
- Fig. 1a, 1b: eine schematische Darstellung eines Wertdokuments mit einem Sicherheitselement;
- Fig. 2: eine schematische Darstellung eines Ausschnitts einer Vorrichtung zum Applizieren von Sicherheitselementen gemäß einer Variante;
- Fig. 3: eine schematische Schnittdarstellung eines Ausschnitts eines Sicherheitselemente-Trägerbandes mit einem Sicherheitselement;
- Fig. 4: eine schematische Schnittdarstellung eines Ausschnitts eines Sicherheitselemente-Trägerbandes mit einem Sicherheitselement;

- Fig. 5: eine schematische Darstellung eines Ausschnitts einer Vorrichtung zum Applizieren von Sicherheitselementen gemäß einer weiteren Variante; und
- Fig. 6: eine schematische Darstellung eines Ausschnitts einer Vorrichtung gemäß dem Stand der Technik.

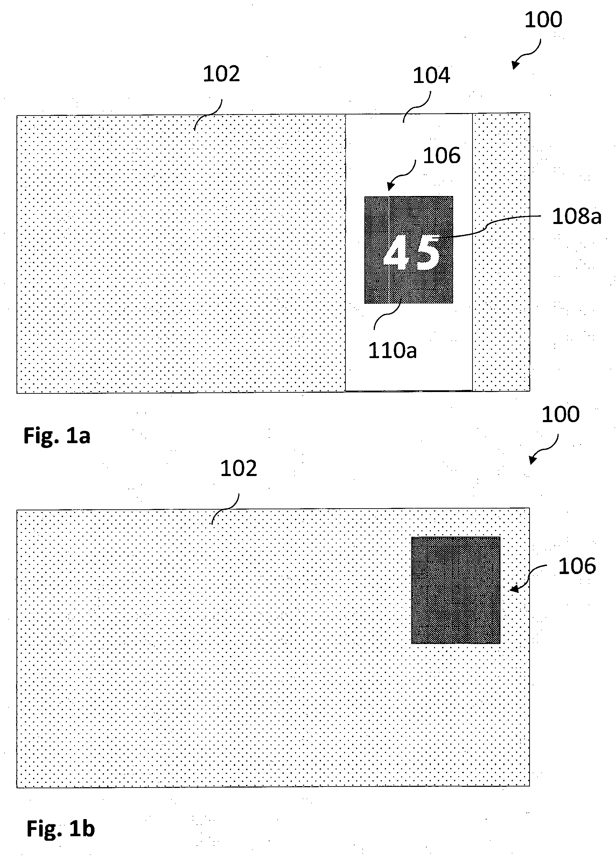

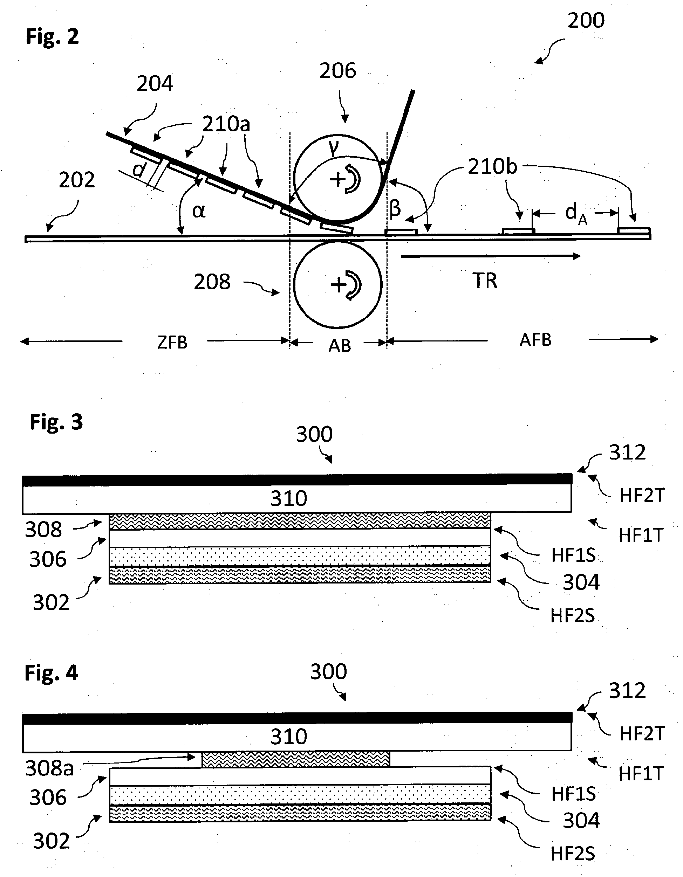

**Figuren 1a und 1b** zeigen jeweils eine schematische Draufsicht auf eine Hauptfläche eines Wertdokuments 100 mit einem Wertdokumentsubstrat 102 und einem Sicherheitselement 104, wobei das Sicherheitselement 104 fest mit dem Wertdokumentsubstrat 102 verbunden ist. Das Sicherheitselement 104 ist mit seiner zweiten Hauptfläche auf das Wertdokumentsubstrat aufgebracht. Das Sicherheitselement 104 wurde mit der erfindungsgemäßen Vorrichtung bzw. mit dem erfindungsgemäßen Verfahren auf dem Wertdokumentsubstrat 102 appliziert. Das Wertdokumentsubstrat 102 entstammt einer Wertdokumentsubstratbahn, wie sie z.B. in Fig. 2 mit Bezugszeichen 202 gezeigt ist.

Das Sicherheitselement 104 weist einen Bereich 106 mit Sicherheitsmerkmalen auf, welche einen Negativmuster-Bereich 108a sowie einen Colorshift- bzw. Dünnschichtelement-Bereich 110a umfasst. Weiterhin könnte ein Negativmuster-Bereich jegliche Form oder Ausgestaltung aufweisen. Vorzugsweise ermöglicht ein Negativmuster-Bereich, dass ein Betrachter in Aufsicht und/oder in Durchsicht den Negativmuster-Bereich erkennen kann. Weiterhin vorzugsweise kann der Negativmuster-Bereich in Aufsicht eine andere farbliche Erscheinung als in Durchsicht aufweisen (sog. Durchsichtsfarbeffekte).

Fig. 1a zeigt als Negativmuster-Bereich 108a die Zahl 45. Weiterhin ist das Sicherheitselement 104 in Figur 1a als sog. LEAD-Streifen ausgebildet. Dieser LEAD-Streifen kann als T-LEAD oder als L-LEAD ausgebildet sein. In Fig. 1b umfasst der Negativmuster-Bereich drei nicht dargestellte Streifen. Weiterhin ist das Sicherheitselement 104 in Fig. 1b als sog. Patch ausgebildet. Dieser Patch kann als T- Patch oder als L- Patch ausgebildet sein.

Gemäß einer Ausführungsform kann in dem Wertdokumentsubtrat 102 gemäß Figur 1a bzw. 1b in dem Bereich 106 ein Fenster bzw. Loch vorgesehen sein, welches durch das Sicherheitselement 104 bedeckt bzw. verschlossen ist.

Ein Streifen genauso wie ein Patch kann weiterhin jegliche Form (Außenkontur) oder Ausgestaltung (Schichtaufbau) aufweisen.

Ist das Sicherheitselement 104 als L-LEAD oder als L-Patch ausgebildet, beinhaltet es vorzugsweise ein Trägermaterial. Das Trägermaterial besteht vorzugsweise aus Polyethylenterephthalat (PET).

**Fig. 2** zeigt eine schematische Darstellung eines Ausschnitts einer Vorrichtung 200 zum Applizieren von Sicherheitselementen 210 auf eine Wertdokumentsubstratbahn 202. Die Wertdokumentsubstratbahn 202 wird von einem Zufuhrbereich ZFB in einen Applizierbereich AB und anschließend in einen Abführbereich AFB transportiert. Der Transport der Wertdokumentsubstratbahn 202 erfolgt in Transportrichtung TR. In dem Applizierbereich AB werden Sicherheitselemente 210a, welche auf einem Sicherheitselemente-Trägerband 204 angeordnet sind, auf die Wertdokumentsubstratbahn 202 übertragen bzw. appliziert. Die auf die Wertdokumentsubstratbahn 202 applizierten Sicherheitselemente 210b sind dann fest mit der Wertdokumentsubstratbahn 202 verbunden bzw. auf dieser fixiert. Um Material zu sparen, sind die Sicherheitselemente 210, solange sie auf dem Sicherheitselemente-Trägerband 204 angeordnet sind, mit einem geringeren Abstand d hintereinander gereiht (siehe Sicherheitselemente 210a) als nach einem Applizieren auf die Wertdokumentsubstratbahn 202. Nach einem Applizieren haben die Sicherheitselemente einen größeren Abstand d_{A} voneinander (siehe Sicherheitselemente 210b).

Vorzugsweise ändert sich durch das Applizieren der Sicherheitselemente nur der Abstand in Transportrichtung, während der Abstand quer zur Transportrichtung bestehen bleiben kann. Insbesondere ist der Abstand d_{A} größer als der Abstand d.

Im Applizierbereich AB ist eine Appliziereinrichtung 206 vorgesehen, welche das Applizieren/Übertragen der Sicherheitselemente 210 auf die Wertdokumentsubstratbahn 202 unterstützt. Die Appliziereinrichtung 206 ist eine Applizierrolle Vorzugsweise kann eine Gegendruckeinrichtung 208 im Applizierbereich AB vorgesehen sein, um einerseits den Übertrag der Sicherheitselemente 210 auf die Wertdokumentsubstratbahn 202 zu unterstützen und andererseits die mechanischen Belastungen durch die Applizierrolle 206 auf die Wertdokumentsubstratbahn 202 zu reduzieren.

In dem Zuführbereich ZFB schließen die Wertdokumentsubstratbahn 202 und das Sicherheitselemente-Trägerband 204 einen Winkel α ein. Im Abführbereich AFB schließen die Wertdokumentsubstratbahn 202 und das Sicherheitselemente-Trägerband 204 einen Winkel β ein.

Die Vorrichtung 200 weist einen Applizierwinkel γ auf. Der Applizierwinkel γ liegt vorzugsweise in einem Bereich von 5° bis 40°und/ oder von 5° bis 30° und/ oder von 5° bis 25° und/ oder von 5° bis 20° und/ oder von 5° bis 15° und/ oder von 5° bis 10° und/ oder von 8° bis 20° und/ oder von 8° bis 15°.

Gemäß dem Beispiel von Fig. 2 wird der Applizierwinkel γ insbesondere durch die Größe bzw. den Durchmesser der Applizierrolle 206 sowie die Winkel α und β bestimmt.

**Fig. 3** zeigt eine schematische Schnittdarstellung eines Ausschnitts 300 eines Sicherheitselemente-Trägerbandes mit einem Sicherheitselement. Das Sicherheitselemente-Trägerband umfasst ein Trägermaterial bzw. Trägerbandmaterial 310. Das Sicherheitselemente-Trägerband weist eine erste Hauptfläche HF1T und eine zweite Hauptfläche HF2T auf. Vorzugsweise weist die erste Hauptfläche HF1T adhäsive Eigenschaften auf. Vorzugsweise werden die adhäsiven Eigenschaften von mindestens einer Schicht 308 bereitgestellt. Bevorzugt ist die Schicht 308 eine Klebstoffschicht 308, die auf dem Trägerbandmaterial 310 aufgebracht ist. Die zweite Hauptfläche HF2T kann antihaftende Eigenschaften aufweisen. Vorzugsweise kann an dem Trägerbandmaterial 310 eine Antihaftschicht 312, wie eine Wachsschicht, aufgebracht sein. Auf der ersten Hauptfläche HF1T des Sicherheitselemente-Trägerbandes ist ein Sicherheitselement angeordnet, welche beispielsweise die Schichten 302, 304 und 306 umfasst. Das Sicherheitselement weist eine erste Hauptfläche HF1S und eine zweite Hauptfläche HF2S auf. Das Sicherheitselement ist mit seiner ersten Hauptfläche HF1S an dem Sicherheitselemente-Trägerband angeordnet bzw. fixiert.

Das Sicherheitselement weist an seiner zweiten Hauptfläche HF2S adhäsive Eigenschaften auf, so dass das Sicherheitselement mit seiner zweiten Hauptfläche HF2S an einer Wertdokumentsubstratbahn fixiert bzw. auf dieser appliziert werden kann. Vorzugsweise weist das Sicherheitselement eine Schicht 302 auf, die als Klebstoffschicht ausgebildet ist, um das Sicherheitselement an einer Wertdokumentsubstratbahn zu fixieren. Die Klebstoffschicht kann eine Heißsiegelklebstoffschicht sein. An seiner ersten Hauptfläche HF1S weist das Sicherheitselement vorzugsweise keine selbstklebenden Eigenschaften auf. Das Sicherheitselement kann gemäß einer Ausführungsform ein Trägermaterial umfassen, so dass das Sicherheitselement selbsttragende Eigenschaften aufweist. Ein solches Trägermaterial kann beispielsweise eine Trägerfolie sein. Die Schicht 306 oder 304 kann als Trägerfolie ausgebildet sein. Das Sicherheitselement kann weiterhin eine oder mehrere Dekorschichten, wie Lack- und/oder Metallschichten und/ oder Druckschichten enthalten, welche ebenfalls den Schichten 304 oder 306 entsprechen können.

Wie in den Figuren erkennbar, liegt zwischen den mit Abstand voneinander auf dem Sicherheitselemente-Trägerband angeordneten Sicherheitselementen ein freier Bereich. In dem freien Bereich ist kein Mehrschichtaufbau, zumindest keine der Schichten des Sicherheitselements, wie die Schichten 304 und 306, und weiter vorzugsweise keine vollständige Schicht, auf dem Sicherheitselemente-Trägerband vorhanden.

Wird ein Sicherheitselement, wie in Fig. 3 dargestellt, auf eine Wertdokumentsubstratbahn, wie zu Fig. 2 erläutert, aufgebracht und diese Wertdokumentsubstratbahn (202) in einzelne Banknoten konfektioniert, können Wertdokumente gemäß Fig. 1a und 1b erhalten werden.

**Fig.4** zeigt eine schematische Darstellung eines Ausschnitts 300 eines Sicherheitselemente-Trägerbandes mit einem Sicherheitselement, welches im Wesentlichen den zu Fig. 3 erläuterten Gegenständen entspricht. Der wesentliche Unterschied zwischen Fig. 3 und Fig. 4 ist die Schicht 308a. Die Schicht 308a ist gemäß Fig. 4 als diskreter Bereich ausgebildet, so dass die adhäsiven Eigenschaften des Sicherheitselemente-Trägerbandes nur in dem Bereich der Schicht 308a vorliegen.

**Fig. 5** zeigt eine schematische Darstellung eines Ausschnitts einer Vorrichtung 500 zum Applizieren von Sicherheitselementen 510 auf eine Wertdokumentsubstratbahn 502. Die Wertdokumentsubstratbahn 502 wird von einem Zufuhrbereich ZFB in einen Applizierbereich AB und anschließend in einen Abführbereich AFB transportiert. Der Transport der Wertdokumentsubstratbahn 502 erfolgt in Transportrichtung TR. In dem Applizierbereich AB werden Sicherheitselemente 510a, welche auf einem Sicherheitselemente-Trägerband 504 angeordnet sind, auf die Wertdokumentsubstratbahn 502 übertragen bzw. appliziert. Die auf die Wertdokumentsubstratbahn 502 applizierten Sicherheitselemente 510b sind dann fest mit der Wertdokumentsubstratbahn 502 verbunden bzw. auf dieser fixiert. Um Material zu sparen, sind die Sicherheitselemente 510, solange sie auf dem Sicherheitselemente-Trägerband 504 angeordnet sind, mit einem geringeren Abstand d hintereinander gereiht (siehe Sicherheitselemente 510a) als nach einem Applizieren auf die Wertdokumentsubstratbahn 502. Nach einem Applizieren haben die Sicherheitselemente einen größeren Abstand d_{A} voneinander (siehe Sicherheitselemente 510b).

Vorzugsweise ändert sich durch das Applizieren der Sicherheitselemente nur der Abstand in Transportrichtung, während der Abstand quer zur Transportrichtung bestehen bleiben kann. Insbesondere ist der Abstand d_{A} größer als der Abstand d.

Im Applizierbereich AB ist ein Applizierkeil 506a sowie eine Kalanderrolle 506b als Appliziereinrichtung vorgesehen, welche das Applizieren/Übertragen der Sicherheitselemente 510 auf die Wertdokumentsubstratbahn 502 unterstützt. Vorzugsweise kann eine oder mehrere Gegendruckeinrichtungen (nicht gezeigt) im Applizierbereich AB vorgesehen sein, um einerseits den Übertrag der Sicherheitselemente 510 auf die Wertdokumentsubstratbahn 502 zu unterstützen und andererseits die mechanischen Belastungen durch den Applizierkeil 506a und/oder die Kalanderrolle 506b auf die Wertdokumentsubstratbahn 502 zu reduzieren. Die Kalanderrolle 506b ist vorzugsweise beheizt.

In dem Zuführbereich ZFB schließen die Wertdokumentsubstratbahn 502 und das Sicherheitselemente-Trägerband 504 einen Winkel α ein.

Die Vorrichtung 500 weist einen Applizierwinkel γ auf. Vorzugsweise wird der Applizierwinkel γ im Wesentlichen durch den Applizierkeil 506a eingestellt. Der Applizierwinkel γ liegt vorzugsweise in einem Bereich von 5° bis 40° und/ oder von 5° bis 30° und/ oder von 5° bis 25° und/ oder von 5° bis 20° und/ oder von 5° bis 15° und/ oder von 5° bis 10° und/ oder von 8° bis 20° und/ oder von 8° bis 15°.

**Fig. 6** zeigt eine schematische Darstellung eines Ausschnitts 600 einer Vorrichtung gemäß dem Stand der Technik. Hierbei ist in einen Applizierbereich die Transportrichtung eines Bahnmaterials 602 der Transportrichtung eines Transportbandes 604 entgegengesetzt. Das Transportband 604 transportiert die Elemente 610a, die dann auf das Bahnmaterial 602 als Elemente 610d aufgebracht werden.

### Bezugszeichenliste

- 100: Wertdokument
- 102: Wertdokumentsubstrat
- 104: Sicherheitselement
- 106: Bereich mit Sicherheitsmerkmalen
- 108: Negativmuster-Bereich
- 110: Dünnschichtelement-Bereich
- 200: Ausschnitt der Vorrichtung
- 204: Sicherheitselemente-Trägerband
- 206, 506: Appliziereinrichtung
- 208: Gegendruckeinrichtung
- 210a, 210b, 510a, 510b: Sicherheitselemente
- 302, 304, 306, 308: Schicht
- 310: Trägerbandmaterial
- 312: Antihaftschicht
- HF1T: erste Hauptfläche des Sicherheitselemente-Trägerbandes
- HF2T: zweite Hauptfläche des Sicherheitselemente-Trägerbandes
- HF1S: erste Hauptfläche des Sicherheitselements
- HF2S: zweite Hauptfläche des Sicherheitselements

## Patentansprüche

1. Vorrichtung (200; 500) zum Applizieren von Sicherheitselementen, umfassend
- zumindest eine Wertdokumentsubstrat-Transporteinrichtung zum Transport einer Wertdokumentsubstratbahn (202; 502),
- zumindest eine Sicherheitselemente-Transporteinrichtung zum Transport eines Sicherheitselemente-Trägerbandes (204;504) mit einer Vielzahl von Sicherheitselementen (210a; 510a), wobei
-- das Sicherheitselemente-Trägerband (204) eine erste und eine zweite Hauptfläche aufweist, die einander gegenüberstehen,
-- jedes Sicherheitselement (210a; 510a) eine erste und eine zweite Hauptfläche aufweist, die einander gegenüberstehen,
-- jedes Sicherheitselement (210a; 510a) mit seiner ersten Hauptfläche auf der ersten Hauptfläche des Sicherheitselemente-Trägerbandes (204; 504) angeordnet ist, und
-- jedes Sicherheitselement (210a; 510a) an seiner zweiten Hauptfläche adhäsive Eigenschaften aufweist,
**dadurch gekennzeichnet, dass**
- die Vorrichtung einen Applizierbereich aufweist, um die Sicherheitselemente (210a; 510a) von dem Sicherheitselemente-Trägerband (204; 504) zu lösen und mit deren zweiter Hauptfläche auf der Wertdokumentsubstratbahn (202; 505) zu applizieren, und
- die Sicherheitselemente (210a; 510a) auf dem Sicherheitselemente-Trägerband (204; 504) mit einem geringeren Abstand hintereinander gereiht sind als nach einem Applizieren auf die Wertdokumentsubstratbahn (202; 502).

2. Vorrichtung (200; 500) nach Anspruch 1, wobei die Wertdokumentsubstratbahn (202; 502) und das Sicherheitselemente-Trägerband (204;504) im Applizierbereich im Wesentlichen die gleiche Transportrichtung aufweisen und/ oder die Vorrichtung das Sicherheitselemente-Trägerband (204;504) und die Wertdokumentsubstratbahn (202; 502) in einem Rolle-zu-Rolle-Verfahren durch den Applizierbereich transportiert.

3. Vorrichtung (200; 500) nach Anspruch 1 oder 2, wobei die Vorrichtung in dem Applizierbereich eine Appliziereinrichtung (206, 506a) und vorzugsweise eine Gegendruckeinrichtung (208, 508), insbesondere eine Gegendruckrolle, aufweist.

4. Vorrichtung (200; 500) nach einem oder mehreren der Ansprüche 1 bis 3, wobei der Applizierbereich zwischen einem Zuführbereich und einem Abführbereich des Sicherheitselemente-Trägerbandes (204;504) angeordnet ist, wobei die Vorrichtung einen Applizierwinkel γ aufweist, und der Applizierwinkel γ vorzugsweise in einem Bereich von 5° bis 40° liegt.

5. Vorrichtung (200; 500) nach einem oder mehreren der Ansprüche 1 bis 4, wobei die Vorrichtung mindestens einen Bearbeitungsbereich, wie einen Schneide- oder Stanzbereich, umfasst, der vor dem Applizierbereich angeordnet ist.

6. Vorrichtung (200; 500) nach einem oder mehreren der Ansprüche 1 bis 5, wobei eine Geschwindigkeit des Sicherheitselemente-Trägerbandes (204;504) im Applizierbereich geringer ist als eine Geschwindigkeit der Wertdokumentsubstratbahn (202; 502).

7. Verfahren zum Applizieren von Sicherheitselementen (210a; 510a), umfassend
- Bereitstellen zumindest einer Wertdokumentsubstrat-Transporteinrichtung, welche eine Wertdokumentsubstratbahn (202; 502) transportiert,
- Bereitstellen zumindest einer Sicherheitselemente-Transporteinrichtung, welche ein Sicherheitselemente-Trägerband (204; 504) mit einer Vielzahl von Sicherheitselementen (210a; 510a) transportiert, wobei
-- das Sicherheitselemente-Trägerband (204; 504) eine erste und eine zweite Hauptfläche aufweist, die einander gegenüberstehen,
-- jedes Sicherheitselement (210a; 510a) eine erste und eine zweite Hauptfläche aufweist, die einander gegenüberstehen,
-- jedes Sicherheitselement (210a; 510a) mit seiner ersten Hauptfläche auf der ersten Hauptfläche des Sicherheitselemente-Trägerband (204; 504) angeordnet ist, und
-- jedes Sicherheitselement (210a; 510a) an seiner zweiten Hauptfläche adhäsive Eigenschaften/ Adhäsionsschicht aufweist,
- Applizieren der Sicherheitselemente (210a; 510a) auf der Wertdokumentsubstratbahn (202; 502), **dadurch gekennzeichnet, dass**
beim Applizieren die Sicherheitselemente (210a; 510a) von dem Sicherheitselemente-Trägerband (204; 504) gelöst und mit deren zweiter Hauptfläche auf der Wertdokumentsubstratbahn (202; 502) fixiert werden, und
eine Geschwindigkeit des Sicherheitselemente-Trägerbandes (204; 504) im Applizierbereich geringer ist als eine Geschwindigkeit der Wertdokumentsubstratbahn (202; 502).

8. Verfahren nach Anspruch 7 in einer Vorrichtung nach einem der Ansprüche 1 bis 6.

## Claims

1. An apparatus (200; 500) for applying security elements, comprising
- at least one value document substrate transport device for transporting a value document substrate web (202; 502),
- at least one security elements transport device for transporting a security elements carrier band (204; 504) having a plurality of security elements (210a; 510a), wherein
-- the security elements carrier band (204) has a first and a second main surface which oppose each other,
-- each security element (210a; 510a) has a first and a second main surface which oppose each other,
-- each security element (210a; 510a) is arranged with its first main surface on the first main surface of the security elements carrier band (204; 504), and
-- each security element (210a; 510a) has adhesive properties at its second main surface,
**characterized in that**
- the apparatus has an application region in order to detach the security elements (210a; 510a) from the security elements carrier band (204; 504) and to apply them with their second main surface onto the value document substrate web (202; 505) and
- the security elements (210a; 510a) are lined up one behind the other on the security elements carrier band (204; 504) with a smaller distance than after applying on the value document substrate web (202; 502).

2. The apparatus (200; 500) according to claim 1, wherein the value document substrate web (202; 502) and the security elements carrier band (204; 504) in the application region substantially have the same transport direction and/or the apparatus transports the security elements carrier band (204; 504) and the value document substrate web (202; 502) in a roll-to-roll method through the application region.

3. The apparatus (200; 500) according to claim 1 or 2, wherein the apparatus has an application device (206, 506a) and preferably a counterpressure device (208, 508), in particular a counterpressure roll, in the application region.

4. The apparatus (200; 500) according to one or more of claims 1 to 3, wherein the application region is arranged between a feeding region and a removing region of the security elements carrier band (204; 504), wherein the apparatus has an application angle γ, and the application angle γ preferably is in a region of 5° to 40°.

5. The apparatus (200; 500) according to one or more of claims 1 to 4, wherein the apparatus comprises at least one processing region, such as a cutting or punching region, which is arranged before the application region.

6. The apparatus (200; 500) according to one or more of claims 1 to 5, wherein a speed of the security elements carrier band (204; 504) in the application region is lower than a speed of the value document substrate web (202; 502).

7. A method for applying security elements (210a; 5 10a), comprising
- supplying at least one value document substrate transport device which transports a value document substrate web (202; 502),
- supplying at least one security elements transport device which transports a security elements carrier band (204; 504) having a plurality of security elements (210a; 5 10a), wherein
-- the security elements carrier band (204; 504) has a first and a second main surface which oppose each other,
-- each security element (210a; 510a) has a first and a second main surface which oppose each other,
-- each security element (210a; 510a) is arranged with its first main surface on the first main surface of the security elements carrier band (204; 504), and
-- each security element (210a; 510a) has adhesive properties/adhesive layer at its second main surface,
- applying the security elements ((210a; 510a) onto the value document substrate web (202; 502), **characterized in that**
upon applying, the security elements (220a; 510a) are detached from the security elements carrier band (204; 504) and are fixed with their second main surface onto the value document substrate web (202; 502), and
a speed of the security elements carrier band (204; 504) in the application region is lower than a speed of the value document substrate web (202; 502).

8. A method according to claim 7 in an apparatus according to any of claims 1 to 6.

## Revendications

1. Dispositif (200; 500) destiné à l'application d'éléments de sécurité, comprenant
- au moins un équipement de transport de substrat pour documents de valeur destiné au transport d'une feuille de substrat pour documents de valeur (202; 502),
- au moins un équipement de transport d'éléments de sécurité destiné au transport d'une bande support d'éléments de sécurité (204; 504) ayant une pluralité d'éléments de sécurité (210a; 510a), cependant que
- la bande support d'éléments de sécurité (204) comporte une première et une deuxième surface principale opposées entre elles,
- chaque élément de sécurité (210a; 510a) comporte une première et une deuxième surface principale opposées entre elles,
- chaque élément de sécurité (210a; 510a) est agencé par sa première surface principale sur la première surface principale de la bande support d'éléments de sécurité (204; 504), et
- chaque élément de sécurité (210a; 510a) comporte à sa deuxième surface principale des propriétés adhésives,
**caractérisé en ce que**
- le dispositif comporte une zone d'application pour détacher de la bande support d'éléments de sécurité (204; 504) les éléments de sécurité (210a; 510a) et pour les appliquer par leur deuxième surface principale sur la feuille de substrat pour documents de valeur (202; 505), et
- les éléments de sécurité (210a; 510a) sont alignés les uns derrière les autres sur la bande support d'éléments de sécurité (204; 504) avec un écart plus faible qu'après l'application sur la feuille de substrat pour documents de valeur (202; 505).

2. Dispositif (200; 500) selon la revendication 1, cependant que la feuille de substrat pour documents de valeur (202; 502) et la bande support d'éléments de sécurité (204; 504) présentent dans la zone d'application essentiellement la même direction de transport et/ou que le dispositif transporte la bande support d'éléments de sécurité (204; 504) et la feuille de substrat pour documents de valeur (202; 502) dans un procédé rouleau à rouleau à travers la zone d'application.

3. Dispositif (200; 500) selon la revendication 1 ou 2, cependant que le dispositif comporte dans la zone d'application un équipement d'application (206; 506a) et de préférence un équipement de contre-pression (208; 508), en particulier un rouleau de contre-pression.

4. Dispositif (200; 500) selon une ou plusieurs des revendications de 1 à 3, cependant que la zone d'application est agencée entre une zone d'amenée et un zone d'évacuation de la bande support d'éléments de sécurité (204; 504), cependant que le dispositif présente un angle d'application γ et que l'angle d'application γ est de préférence compris entre 5° et 40°.

5. Dispositif (200; 500) selon une ou plusieurs des revendications de 1 à 4, cependant que le dispositif présente au moins une zone de traitement telle qu'une zone de découpe ou de poinçonnement agencée avant la zone d'application.

6. Dispositif (200; 500) selon une ou plusieurs des revendications de 1 à 5, cependant qu'une vitesse de la bande support d'éléments de sécurité (204; 504) dans la zone d'application est plus faible qu'une vitesse de la feuille de substrat pour documents de valeur (202; 502).

7. Procédé d'application d'éléments de sécurité (210a; 510a), comprenant
- mise à disposition d'au moins un équipement de transport de substrat pour documents de valeur, lequel transporte une feuille de substrat pour documents de valeur (202; 502),
- mise à disposition d'au moins un équipement de transport d'éléments de sécurité, lequel transporte une bande support d'éléments de sécurité (204; 504) ayant une pluralité d'éléments de sécurité (210a; 510a), cependant que
- la bande support d'éléments de sécurité (204; 504) comporte une première et une deuxième surface principale opposées entre elles,
- chaque élément de sécurité (210a; 510a) comporte une première et une deuxième surface principale opposées entre elles,
- chaque élément de sécurité (210a; 510a) est appliqué par sa première surface principale sur la première surface principale de la bande support d'éléments de sécurité (204; 504), et
- chaque élément de sécurité (210a; 510a) comporte à sa deuxième surface principale des propriétés adhésives / couche d'adhésion,
- application des éléments de sécurité (210a; 510a) sur la feuille de substrat pour documents de valeur (202; 502), **caractérisé en ce que**
lors de l'application, les éléments de sécurité (210a; 510a) sont détachés de la bande support d'éléments de sécurité (204; 504) et sont fixés par leur deuxième surface principale sur la feuille de substrat pour documents de valeur (202; 505), et
une vitesse de la bande support d'éléments de sécurité (204; 504) dans la zone d'application est plus faible qu'une vitesse de la feuille de substrat pour documents de valeur (202; 502).

8. Procédé selon la revendication 7 dans un dispositif selon une des revendications de 1 à 6.
